# EUROPEAN PATENT SPECIFICATION

(11) **EP 3 807 048 B1**
(45) Date of publication and mention of the grant of the patent: **06.05.2026**
(21) Application number: 19843128.0
(22) Date of filing: 14.05.2019
(51) Int. Cl.: B24B 19/03, C03C 19/00, C03C 23/00

(54) **A DISCRETE CHANNEL GROOVING METHOD**
RILLVERFAHREN FÜR DISKRETE KANÄLE
PROCÉDÉ DE RAINURAGE DE CANAL DISCRET

(30) Priority: 13.06.2018 TR 201808502
(43) Date of publication of application: 21.04.2021
(73) Proprietor: YORGLASS ENDUSTRIYEL CAM SANAYI VE TICARET ANONIM SIRKETI, Yunusemre / Manisa (TR)
(72) Inventor: ONGAN, Necati Tamer, 26110 Eskisehir (TR)
(74) Representative: Kayahan, Senem
(86) International application number: PCT/TR2019/050329
(87) International publication number: WO 2020/027754

(56) References cited:
- CN-A- 102 729 119
- CN-A- 102 729 119
- CN-A- 106 670 654
- CN-U- 205 498 449
- CN-U- 205 765 409
- CN-U- 205 765 409
- US-A- 5 409 416
- US-A- 5 409 416

## Description

### Technical Field

The invention relates to a discrete channel grooving system developed to open a channel in the required dimensions in the glass industry.

The invention particularly relates to the discrete channel grooving system, which reduces costs by using fewer discs and allows channel engraving at the desired length and depth in the desired area of the glass.

### Prior Art

The glass is a basic material of use that humanity cannot give up and pass. Since ancient times, glass has been used both in constructions and ornaments. In present, it still has a wide area of use from the simplest tools to communication and space technologies. After formatting, the glass produced may not have the qualities to be used. Therefore, with the use of methods such as cutting, tempering, grinding, grooving, bevelling, acid, sandblasting etc. and the applied processes, the glass is made suitable for the area to be used. The image obtained by engraving on the glass surfaces is called grooving. In the areas of interior decoration and furniture, flat and shaped channel applications can be made on the surfaces of glass and mirror. By giving an aesthetic appearance from the edges of the glass in channel applications, glass mirrors are provided with functionality.

In the areas of interior decoration and furniture, flat and shaped channel applications can be made on the surfaces of glass and mirror. The shaping of the surface of the glass is engraved at different depths along a straight line and is called flat grooving. Channel blocks (discs) are fixed in the flat grooving process. The engraving process is carried out by moving the glass along a straight line through the fixed channel blocks. Shaped channel grooving is done in CNC machines. In this type of grooving, the glass to be processed is fixed while the channel blocks are in free motion. This process is performed on the surface near the edges of the glass. Channel grooving materials are channel blocks (disc) and seals. To groove a channel, the depth and width of the channel are important. While the depth and width of the channel are created by the channel blocks, the seals perform the polishing process. The channel block makes the engraving on the glass. The depth and width of the channel on the glass is formed by the channel blocks. Far the width and depth of the channel that can be opened at a time, only one piece of channel block and one seal is enough. The wider or deeper channels are made via using two channel blocks. One of these blocks should be rough and the other should be thin. The rough block gives the depth and the thin block gives form. Today, two types of machines are used in the channel grooving operations as flat channel machines and CNC machines. In flat channel machines, the surface of the glass is carved in various depths and widths along a straight line to give the shape. Flat printing machines include one plotter stone, two diamond stone (channel block) and two seals. In the CNC machines, grooving in desired patterns is performed on the surface of the glass. The desired shape can be processed automatically in CNC machines on glass surfaces of various thickness and types through the computer programs.

CN106670654A discloses a glass surface grinder that replaces traditional mechanical engraving heads with a laser emitting head, enabling high-precision engraving on glass surfaces without frequent tool replacement. The device comprises a table, three stepper motors, and two conveyor systems arranged perpendicularly to each other to move the laser beam longitudinally and laterally via drive wheels, belts, and rollers on guide rails. A beam structure supports the laser generator, fiber-optic cable, and laser head, allowing full-plane movement of the laser for engraving operations.

CN205498449U discloses a numerical control (NC) glass groove machine system that integrates traditional sandblasting-type glass engraving with modern computer-based CNC technology. The system combines a PC with a DMC1000 multi-axis motion control card to create an open-architecture digital control platform for glass engraving. The structure includes a bearing base, Y-direction motor, Z-axis mounting rod, Z-direction slide, pneumatic control valve, X-direction motion bracket, X- and Y-axis motors, and a pneumatic engraving nozzle. The motors are controlled through the DMC1000 motion control card, while pneumatic operations are managed via a digital I/O card. PLC software and screen-operated flat channel grooving machines in use today enable opening of the uninterrupted and continuous flat channels along the edges of the glass. In the said method, the motor opening the channel at the desired depth along the glass has a negative effect on spindle and engine life. On the other hand, the necessity of single and continuous operation of the channel in the current method causes the demand of theconsumer to not be met.

As a result, the need tor a discrete channel grooving system that resolves the disadvantages in the present technique and the absence of an existing solution, necessitated an improvement in the relevant technical field.

The aim of the invention is to enable the grooving of the channel at a desired length and depth through the encoder machine used in the discrete channel grooving system.

Another aim of the invention is to provide opening the channels on the glass at desired dimensions by means of the pneumatic system which operates depending on the encoder machine used in the discrete channel opening system and by means of the channel motor moving up and down.

Another aim of the invention is to extend the life span of spindle and engine by using the encoder machine and the associated channel engine used in the discrete channel grooving system.

Another aim of the invention is to reduce the cost by reducing the size of the trims fixed at the edges of the glass in the discrete channel grooving system and reducing the number of discs.

Another aim of the invention is to ensure that the demand of the consumer can be fully met by grooving channels in the desired length and depth on the glass with a discrete channel grooving system.

The structural and characteristic features and all advantages of the invention outlined in the drawings below and in the detailed description made by referring these figures will be understood clearly, therefore the evaluation should be made by taking these figures and detailed explanation into consideration.

### Brief Description of Figures

In order to be able to understand the advantages of the present invention together with the additional elements, it is necessary to evaluate it with the figures explained below.

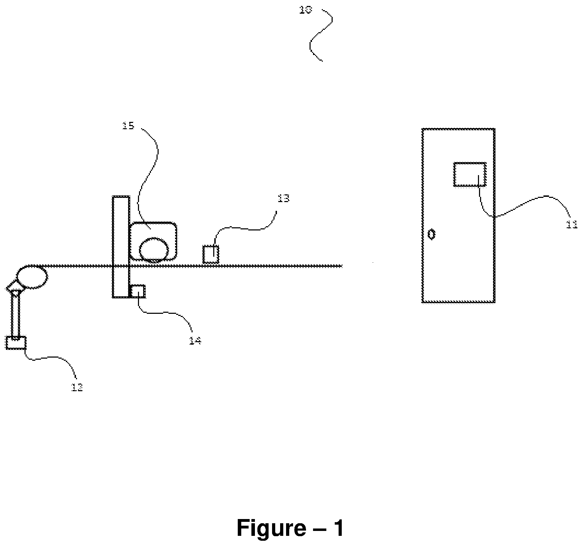

Figure 1; is the schematic general view of the discrete channel grooving system.

### Reference Numbers

10. Discrete channel grooving system
11. DOP screen
12. Encoder
13. Switch
14. Pneumatic valve
15. Channel engine

### Detailed Description of the Invention

In this detailed description, a discrete channel grooving system (10) of the invention which reduces production costs by reducing the number of disks and allows channel grooving at desired length and depth in the desired area of the glass, as an example for better understanding of the subject without any limiting effect.

The discrete grooving system (10), shown in Figure-1, which has been developed to be used for grooving channels in the glass sector, in its simplest form, comprises a DOP screen (11), which enables channel opening on the glass via the software it contains, an encoder (12), which determines the speed of the machine and calculates the path taken by the glass per unit time to measure the channel, a switch (13) for detecting the incoming glass by a channel engine (15), a pneumatic valve (14) for moving the channel engine (15) up and down, and the channel engine (15) for grooving discrete channels by moving up and down on the glass. In the discrete channel grooving system (10), which is designed to open channels on the glass entering the lapping machine, it is possible to open the channel on the glass in desired dimensions by operating the channel engine, by means of the encoder (12) which takes the machine speed information, make the channel measurement and consequently open the desired channel via the upward and downward movement of the channel engine (15) actuated by the pneumatic valve (14). The said discrete channel grooving system (10) is managed by PLC software and the DOP screen (11). The necessity of continuous channel grooving in the form of a flat line of the currently used glass channel machines which has been eliminated by the said discrete channel grooving system (10) and the consumer demand has been met. The spindle and channel motor (15) life are extended due to the grooving of the discrete channels at the edge of the glass by the discrete channel grooving system (10). In said discrete grooving system (10), by reducing the size of the trims fitted to the glass edge and reducing the number of discs, the costs have been significantly reduced and the economic advantage has been achieved. With the development of the discrete channel opening system (10) of the invention, the desired size of the discrete channel opening on the glass is made possible and the number of discs used has been reduced.

In order to groove a channel at the glass edges in said discrete grooving system (10), first, the channel dimensions to be opened are entered via the DOP screen (11). The glass advancing through the lapping machine then contacts the switch (13) and then the glass moves towards the channel motor (15), whose speed is measured by the encoder (12). Then, pneumatic valve (14) is activated with the switch (13) and encoder (12) that is processed on PLC panel and the channel engine (15) is moved up and down to enable the opening of channels in the desired width and length. The channel measurement information entered by the operator through the said DOP screen (11) enables the pneumatic valve (14) to move by measuring with the glass information touching the switch (13) after the encoder (12) which is connected to the machine via the PLC software. In this way, the channel engine (15) moves up and down to groove the discrete channel on the glass in the desired dimensions, either along the entire edge or on a part of the glass edge.

## Claims

1. A discrete grooving system (10) that allows channel grooving on the glass, which reduces production costs by reducing the number of disks and allows channel grooving at desired length and depth in the desired area of the glass, **characterized by** comprising:
a DOP screen (11) which enables the grooving on the glass via a PLC software and where the channel dimensions are entered,
an encoder (12) which determines the speed and calculates the path taken by the glass per unit time to measure the channel,
a channel engine (15) that allows the discrete channel to be opened by moving upward and downward on the glass,
a pneumatic valve (14) that allows a channel engine (15) to be moved upward and downward,
wherein the channels are opened on the glass in desired dimensions by operating the channel engine (15), by means of the encoder (12) which takes the machine speed information, make the channel measurement and consequently open the desired channel via the upward and downward movement of the channel engine (15) actuated by the pneumatic valve (14),
a switch (13) which allows the incoming glass to be detected by the channel engine (15),
a PLC software that manages the activation of the pneumatic valve (14) with the data of the switch (13) and encoder (12), and the process of opening the channels in the desired size and length by moving the channel engine (15) upward and downward.

## Patentansprüche

1. Ein diskretes Rillensystem (10), das das Rillen von Kanälen auf Glas ermöglicht, wodurch die Produktionskosten durch eine Verringerung der Anzahl der Scheiben gesenkt werden und das Rillen von Kanälen in der gewünschten Länge und Tiefe im gewünschten Bereich des Glases ermöglicht wird, **gekennzeichnet durch**:
einem DOP-Bildschirm (11), der die Rillung auf dem Glas über eine SPS-Software ermöglicht und in den die Kanalabmessungen eingegeben werden,
einem Encoder (12), der die Geschwindigkeit bestimmt und den Weg berechnet, den das Glas pro Zeiteinheit zurücklegt, um den Kanal zu messen,
einem Kanalantrieb (15), der es ermöglicht, den diskreten Kanal durch Auf- und Abwärtsbewegung auf dem Glas zu öffnen,
ein pneumatisches Ventil (14), das es ermöglicht, eine Kanalmaschine (15) nach oben und unten zu bewegen,
wobei die Kanäle auf dem Glas in den gewünschten Abmessungen geöffnet werden, indem die Kanalmaschine (15) mittels des Encoders (12) betätigt wird, der die Maschinen-Geschwindigkeitsinformationen erfasst, die Kanalmessung durchführt und anschließend den gewünschten Kanal durch die Auf- und Abbewegung der Kanalmaschine (15) öffnet, die durch das pneumatische Ventil (14)
ein Schalter (13), der es ermöglicht, das ankommende Glas durch den Kanalantrieb (15) zu erfassen,
eine SPS-Software, die die Aktivierung des pneumatischen Ventils (14) mit den Daten des Schalters (13) und des Encoders (12) steuert und den Prozess des Öffnens der Kanäle in der gewünschten Größe und Länge durch Auf- und Abwärtsbewegung des Kanalantriebs (15) verwaltet.

## Revendications

1. Système de rainurage discret (10) qui permet de rainurer des canaux dans le verre, ce qui réduit les coûts de production en diminuant le nombre de disques et permet de rainurer des canaux à la longueur et à la profondeur souhaitées dans la zone souhaitée du verre, **caractérisé en ce qu'**il comprend :
un écran DOP (11) qui permet le rainurage sur le verre via un logiciel PLC et où les dimensions des rainures sont saisies,
un encodeur (12) qui détermine la vitesse et calcule le trajet parcouru par le verre par unité de temps pour mesurer la rainure,
un moteur de rainurage (15) qui permet d'ouvrir la rainure discrète en se déplaçant vers le haut et vers le bas sur le verre,
une vanne pneumatique (14) qui permet de déplacer un moteur de canal (15) vers le haut et vers le bas,
dans lequel les canaux sont ouverts sur le verre dans les dimensions souhaitées en actionnant le moteur de canal (15), au moyen du codeur (12) qui prend les informations de vitesse de la machine, effectue la mesure du canal et ouvre par conséquent le canal souhaité via le mouvement vers le haut et vers le bas du moteur de canal (15) actionné par la vanne pneumatique (14),
un interrupteur (13) qui permet au moteur de canal (15) de détecter le verre entrant,
un logiciel PLC qui gère l'activation de la vanne pneumatique (14) à l'aide des données de l'interrupteur (13) et du codeur (12), ainsi que le processus d'ouverture des canaux dans la taille et la longueur souhaitées en déplaçant le moteur de canal (15) vers le haut et vers le bas.
